# FASCICULE DE BREVET EUROPEEN

(11) **EP 0 350 380 B1**
(45) Date de publication et mention de la délivrance du brevet: **17.02.1993**
(21) Numéro de dépôt: 89401893.6
(22) Date de dépôt: 30.06.1989
(51) Int. Cl.: A47J 27/14, A47J 43/046, A47J 43/07

(54) **Robot électroménager comprenant un accessoire mélangeur chauffant**
Mixer mit einem beheizbaren Mischzusatzgerät
Food processor comprising a heatable mixing accessory

(30) Priorité: 06.07.1988 FR 8809157
(43) Date de publication de la demande: 10.01.1990
(73) Titulaire: SEB S.A., F-21260 Selongey (FR)
(72) Inventeur: Bordes, Jean-Luc, F-65100 Ade (FR)
(74) Mandataire: Bouju, André

(56) Documents cités:
- BE-A- 467 123
- DE-A- 3 633 452
- FR-A- 1 345 880
- FR-A- 2 374 001
- FR-A- 2 608 409
- US-A- 3 005 399
- US-A- 3 176 968
- US-A- 4 501 538

## Description

La présente invention concerne un robot électroménager comportant un accessoire permettant de mélanger et de chauffer une préparation alimentaire telle qu'une sauce.

On connaît des robots électroménagers comprenant un socle renfermant un moteur électrique et des organes de transmission pour entraîner en rotation un arbre vertical faisant saillie hors du socle, ce socle étant normalement adapté pour recevoir de façon amovible une cuve renfermant un organe de hachage et d'éminçage destiné à être accouplé directement avec l'arbre vertical précité.

L'arbre de sortie de ces robots tourne normalement à une vitesse supérieure à 1 000 t/mn. Cette vitesse de rotation n'est pas adaptée à la préparation d'aliments tels que des sauces qui exigent des vitesses de rotation beaucoup plus lentes (de l'ordre de 100 à 200 t/mn).

Par ailleurs, les robots du genre ci-dessus ne sont pas équipés de moyens de chauffage.

Le FR-A-2 374 001 décrit un robot dans lequel un élément de transmission amovible forme une partie du fond de la cuve. L'utilisateur dispose de plusieurs éléments de transmission ayant différents rapports, l'un de ces éléments permettant d'effectuer un mélange à faible vitesse (300 à 1 200 tours par minute). Néanmoins, ces faibles vitesses restent généralement trop élevées pour préparer des sauces. En outre, ce robot ne compte pas non plus de moyens de chauffage.

On connaît par ailleurs des appareils électroménagers du type saucier aptes à mélanger à faible vitesse de rotation et à chauffer des préparations alimentaires.

Ces appareils comportent un socle qui renferme un système réducteur adapté pour obtenir une faible vitesse de rotation ainsi que des moyens de chauffage électriques liés de façon structurelle au socle de l'appareil (voir US-A-3 176 968, sur lequel le préambule de la revendication 1 est basé).

Bien entendu, ces appareils ne permettent pas de réaliser les fonctions de hachage et d'éminçage propres aux robots électroménagers classiques évoqués plus haut.

Le but de la présente invention est de créer un robot électroménager du type classique qui puisse être transformé en appareil mélangeur chauffant et qui puisse ainsi accomplir selon les désirs de l'utilisateur les fonctions classiques de hachage et éminçage ainsi que la fonction mélange avec chauffage.

L'invention vise ainsi un robot électroménager comprenant un socle renfermant un moteur électrique et des organes de transmission pour entraîner en rotation un arbre vertical faisant saillie hors du socle.

Suivant l'invention et tel que décrit dans la revendication 1, en ce qu'il comprend en outre, d'une part une cuve renfermant un organe de hachage et d'éminçage, la cuve pouvant être fixée de façon amovible sur le socle de façon que l'organe de hachage et d'éminçage soit accouplé directement avec l'arbre vertical, et, d'autre part, un accessoire mélangeur chauffant comprenant une cuve et un moyen de chauffage, la cuve renfermant un organe mélangeur et ayant une partie inférieure en contact thermique avec le moyen de chauffage, l'accessoire mélangeur chauffant pouvant être fixé de façon amovible sur le socle de façon que l'organe mélangeur soit accouplé avec l'arbre vertical.

Ainsi, cet accessoire chauffant s'adapte directement sur le socle du robot à l'emplacement prévu pour les accessoires classiques non chauffants du robot.

L'invention permet ainsi de transformer d'une manière simple et économique un robot classique en robot chauffant.

Selon une version avantageuse de l'invention, l'accessoire chauffant comporte un système réducteur de vitesse relié à l'outil de travail et disposé sous le moyen de chauffage, ce système réducteur pouvant s'accoupler à l'arbre vertical du socle.

Ainsi, pour transformer le robot classique en appareil mélangeur chauffant, il suffit d'adapter l'accessoire sur le socle du robot classique de telle sorte que le système réducteur de cet accessoire vienne en prise avec l'arbre de sortie du socle.

Ce système de réduction permet d'atteindre des vitesses de rotation beaucoup plus faibles que celle de l'arbre de sortie précité.

De préférence, la cuve repose sur le moyen de chauffage qui est constitué de préférence par une semelle chauffante qui fait partie intégrante de l'accessoire.

Selon une version avantageuse de l'invention, l'accessoire comprend un boîtier renfermant le système réducteur de vitesse et comportant une paroi inférieure comprenant des moyens pour verrouiller celle-ci au socle. Ces moyens de verrouillage sont identiques à ceux prévus au fond de la cuve qui vient se fixer directement sur le socle dans le cas d'un robot classique.

Le boîtier précité comporte une paroi supérieure sur laquelle est fixée la semelle chauffante.

Selon une version préférée de l'invention, la semelle chauffante comporte sur sa face adjacente à la paroi supérieure du boîtier une résistance électrique de chauffage, cette dernière étant espacée de ladite paroi supérieure du boîtier par une couche d'air, et la semelle étant reliée à cette paroi supérieure par l'intermédiaire de blocs en matière thermiquement isolante.

D'autres particularités et avantages de l'invention apparaîtront encore dans la description ci-après et dans les sous-revendications.

Aux dessins annexés donnés à titre d'exemples non limitatifs :
- la figure 1 est une vue en coupe longitudinale d'un robot électroménager classique équipé d'une cuve non chauffante comportant un organe rotatif de hâchage et d'éminçage,
- la figure 2 est une vue en coupe longitudinale du robot équipé conformément à l'invention d'un accessoire chauffant et mélangeur,
- la figure 3 est une vue en coupe longitudinale de l'accessoire chauffant et mélangeur seul,
- la figure 4 est une vue de dessus du robot muni de l'accessoire chauffant et mélangeur, sans la cuve.

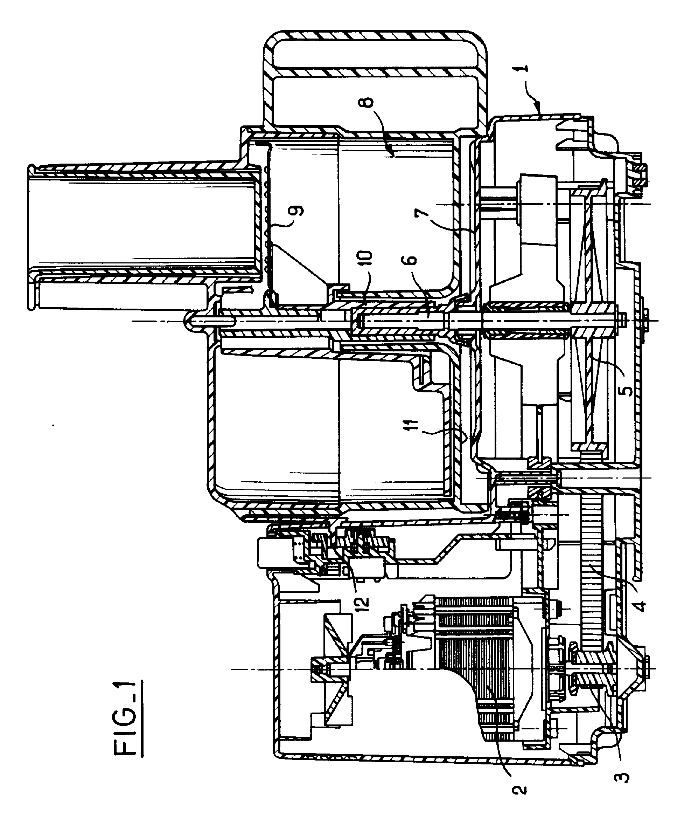

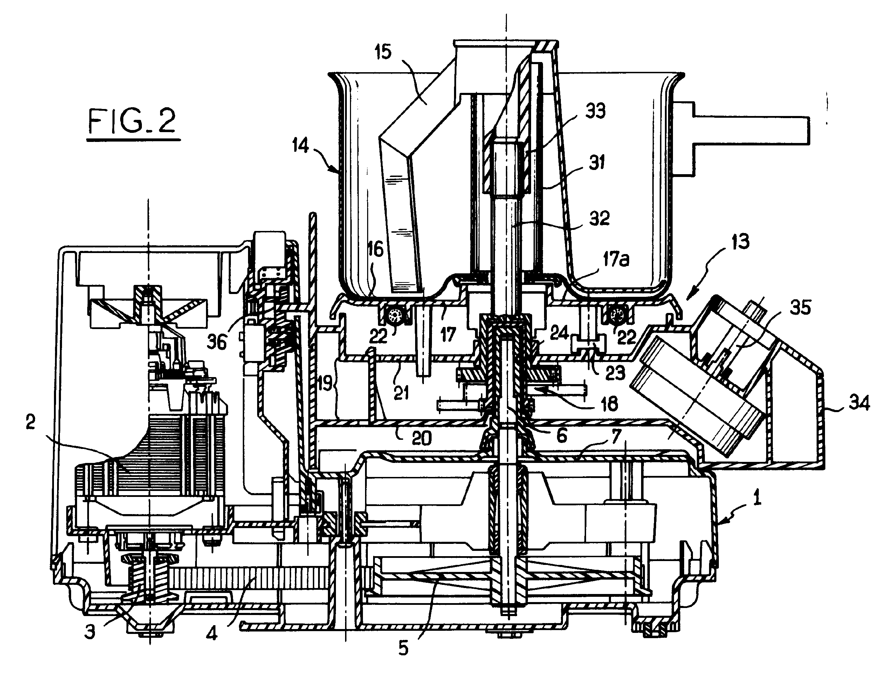

Dans la réalisation des figures 1 et 2, le robot électroménager comprend un socle 1 renfermant un moteur électrique 2 et des organes de transmission 3, 4, 5 pour entraîner en rotation un arbre vertical 6 faisant saillie hors de la surface 7 du socle 1.

Dans l'exemple illustré par la figure 2, le socle 1 reçoit de façon amovible une cuve 8 renfermant un organe rotatif 9 de hâchage et d'éminçage dont le moyeu central 10 est accouplé directement avec l'arbre vertical 6 faisant saillie hors de la surface 7 du socle.

Le fond 11 de la cuve 8 comprend des moyens non représentés permettant de verrouiller cette cuve 8 à la surface 7 du socle. Ces moyens de verrouillage peuvent être du type à baïonnette.

La paroi latérale de la cuve 8 comporte un doigt 12 qui coopère avec un dispositif électrique de sécurité agencé pour n'autoriser la mise en route du moteur que lorsque la cuve 8 est correctement verrouillée sur le socle 1.

L'arbre 6 de sortie a une vitesse de rotation de l'ordre de 1 500 à 2 000 t/mn qui est parfaitement adaptée aux fonctions de hâchage et/ou d'éminçage.

Sur la figure 2, la cuve 8 a été remplacée conformément à l'invention par un accessoire mélangeur chauffant 13.

Cet accessoire 13 comprend une cuve métallique 14 renfermant un organe mélangeur 15. Le fond 16 de cette cuve 14 repose sur une semelle chauffante 17, par exemple en aluminium. Un système réducteur de vitesse 18 relié en rotation à l'organe mélangeur 15 est disposé sous la semelle chauffante 17. Ce système réducteur 18 fait partie de l'accessoire 13 et est accouplé de façon amovible à l'arbre vertical 6 du socle 1.

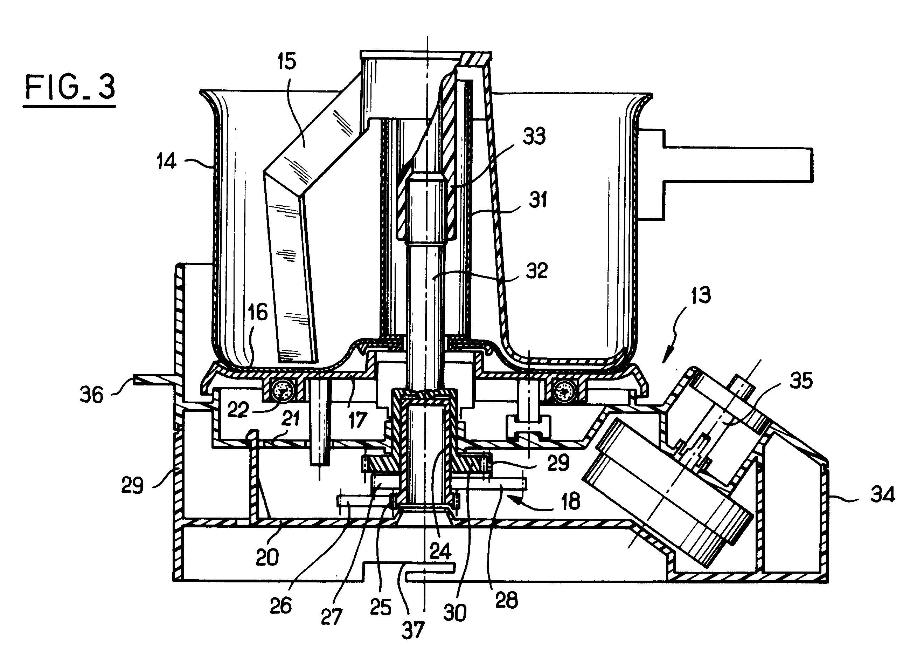

L'accessoire 13 comprend (voir également figure 3) un boîtier 19 en matière plastique renfermant le système réducteur de vitesse 18 et comportant une paroi inférieure 20 comprenant des moyens, par exemple du type à baïonnette 37, pour verrouiller celle-ci au socle 1. Ces moyens de verrouillage sont identiques à ceux prévus sur le fond de la cuve 8, dans le cas de la figure 1. Le boîtier 19 comporte une paroi supérieure 21 sur laquelle est fixée la semelle chauffante 17.

La semelle chauffante 17 comporte sur sa face adjacente à la paroi supérieure 21 du boîtier 19, une résistance électrique de chauffage 22, espacée de cette paroi supérieure 21 du boîtier par une couche d'air.

La semelle 17 est reliée à cette paroi supérieure 21 par l'intermédiaire de blocs 23 en matière thermiquement isolante, de façon à limiter les ponts thermiques entre la semelle chauffante 17 et le boîtier 19 en matière plastique.

Le système réducteur 18 comprend un évidement vertical 24 permettant de réaliser un accouplement par emboîtement avec l'arbre de sortie 6 du socle 1.

Le rapport de réduction du système réducteur 18 est compris entre 5 et 20. Il permet ainsi de réduire la vitesse de rotation de l'organe mélangeur 15 jusqu'aux environs de 100 à 300 t/mn.

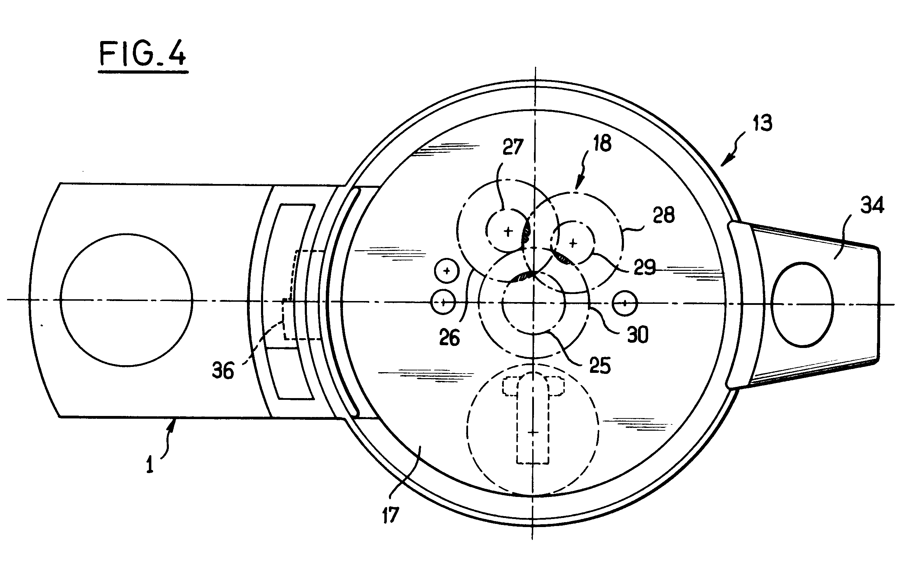

Ce rapport de réduction est obtenu par une série de pignons 25, 26, 27, 28, 29, 30 (voir figure 4) engrénés les uns avec les autres.

La face supérieure 17a de la semelle chauffante 17 comprend des moyens (non représentés) pour verrouiller par rotation la cuve 14 sur cette semelle 17. Ces moyens peuvent être du type à baïonnette.

Par ailleurs, la cuve 14 comporte une cheminée centrale verticale 31 dans laquelle est engagé un arbre vertical 32 issu du système réducteur 18. Cet arbre 32 est accouplé de façon amovible à une douille 33 solidaire de l'organe mélangeur 15 monté en rotation à l'intérieur de la cuve 14.

Le boîtier 19 comprend en outre une protubérance latérale 34 faisant office de poignée de préhension de l'accessoire 13. Cette protubérance 34 renferme un moyen de temporisation 35 de l'état de marche de la résistance chauffante 22. Le moyen de temporisation utilisé dans cet exemple de réalisation consiste en une minuterie mécanique. Il pourrait tout aussi bien être un dispositif électronique, éventuellement couplé à un système thermostatique électronique pour la régulation de la plaque 17. Evidemment une alimentation électrique de l'élément chauffant 22 est prévue. Il s'agit d'un cordon sortant de la paroi du boîtier 21, non visible sur les dessins, et muni d'un connecteur enfichable soit sur une prise de courant du secteur, soit sur une prise de courant encastrée dans le socle 1 du robot, et dont la mise sous tension dépend de l'état de fonctionnement du robot.

Par ailleurs, le boîtier 19 comporte un doigt latéral 36 dont l'emplacement correspond à celui du doigt 12 de la cuve 8 et coopérant avec un dispositif de sécurité pour n'autoriser la mise en route du robot que lorsque l'accessoire 13 est verrouillé au socle 1.

L'utilisation de l'accessoire chauffant et mélangeur que l'on vient de décrire est très simple.

En effet, lorsque l'utilisateur désire chauffer et mélanger une préparation alimentaire telle qu'une sauce, il suffit d'enlever du socle 1 la cuve 8 équipée de l'organe de hâchage et d'éminçage et de la remplacer par l'accessoire chauffant mélangeur 13.

A cet effet, on engage l'évidement 24 du système réducteur 18 sur l'arbre de sortie 6, puis on verrouille l'accessoire 13 sur le socle 1 en tournant cet accessoire au moyen de la poignée 34.

Il suffit ensuite d'engager la douille axiale 33 de la cuve 14 sur l'arbre de sortie 32 du système réducteur puis de verrouiller cette cuve 14 sur la semelle chauffante 17.

Bien entendu, l'invention n'est pas limitée à l'exemple de réalisation que l'on vient de décrire, et on peut apporter à celui-ci de nombreuses modifications sans sortir du cadre de l'invention.

Ainsi, le boîtier 19 de l'accessoire 13 pourrait également renfermer un thermostat permettant de régler la température de chauffage de la semelle 17.

Par ailleurs, la semelle chauffante 17 pourrait faire partie intégrante du fond de la cuve 14 et comporter des moyens pour la verrouiller de façon amovible au boîtier 19.

D'autre part, l'outil de travail de l'accessoire, au lieu d'être un bras mélangeur pourrait présenter des moyens de coupe.

De plus, le moyen de chauffage, au lieu d'être constitué par une semelle ou plaque chauffante sur laquelle repose la cuve 14, pourrait être constitué par un moyen de chauffage enserrant cette cuve.

En outre, le réducteur de vitesse pourrait être remplacé par un séquenseur électronique capable de commander une réduction de vitesse de rotation du moteur électrique situé dans le socle du robot.

## Revendications

1. Robot électroménager comprenant un socle (1) renfermant un moteur électrique (2) et des organes de transmission (3, 4, 5) pour entraîner en rotation un arbre vertical (6) faisant saillie hors du socle, caractérisé en ce qu'il comprend en outre, d'une part, une cuve (8) renfermant un organe de hachage et d'éminçage (9), la cuve (8) pouvant être fixée de façon amovible sur le socle (1) de façon que l'organe de hachage et d'éminçage (9) soit accouplé directement avec l'arbre vertical (6), et, d'autre part, un accessoire mélangeur chauffant (13) comprenant une cuve (14) et un moyen de chauffage (17), la cuve (14) renfermant un organe mélangeur (15) et ayant une partie inférieure en contact thermique avec le moyen de chauffage (17), l'accessoire mélangeur chauffant (13) pouvant être fixé de façon amovible sur le socle (1) de façon que l'organe mélangeur (15) soit accouplé avec l'arbre vertical (6).

2. Robot électroménager conforme à la revendication 1, caractérisé en ce que l'accessoire (13) comprend un système réducteur de vitesse (18) relié à l'organe mélangeur (15) et disposé sous le moyen de chauffage (17), ce système réducteur pouvant s'accoupler à l'arbre vertical (6) du socle (1).

3. Robot conforme à l'une des revendications 1 ou 2, caractérisé en ce que la cuve (14) repose sur le moyen de chauffage (17).

4. Robot conforme à l'une des revendications 1 à 3, caractérisé en ce que le moyen de chauffage (17) est une semelle chauffante.

5. Robot conforme à l'une des revendications 2 à 4, caractérisé en ce que l'accessoire (13) comprend un boîtier (19) renfermant le système réducteur de vitesse (18) et comportant une paroi inférieure (20) comprenant des moyens pour verrouiller celle-ci au socle (1).

6. Robot conforme à l'une des revendications 4 ou 5, caractérisé en ce que le boîtier (19) comporte une paroi supérieure (21) sur laquelle est fixée la semelle chauffante (17).

7. Robot conforme à la revendication 6, caractérisé en ce que la semelle chauffante (17) comporte sur sa face adjacente à la paroi supérieure (21) du boîtier (19) une résistance électrique de chauffage (22), cette dernière étant espacée de ladite paroi supérieure (21) du boîtier par une couche d'air, et la semelle (17) étant reliée à cette paroi supérieure (21) par l'intermédiaire de blocs (23) en matière thermiquement isolante.

8. Robot conforme à l'une des revendications 2 à 7, caractérisé en ce que le système réducteur (18) comprend un évidement vertical (24) apte à venir s'accoupler par emboîtement sur l'arbre de sortie (6) du socle.

9. Robot conforme à l'une des revendications 4 à 8, caractérisé en ce que la face supérieure (17a) de la semelle chauffante (17) comprend des moyens pour verrouiller par rotation la cuve (14) sur cette semelle (17).

10. Robot conforme à l'une des revendications 2 à 9, caractérisé en ce que la cuve (17) comporte une cheminée centrale (31) verticale dans laquelle est engagée un arbre vertical (32) issu du système réducteur (18), cet arbre (32) étant accouplé de façon amovible à une douille (33) solidaire de l'organe mélangeur (15) monté en rotation à l'intérieur de la cuve (14).

11. Robot conforme à l'une des revendications 5 à 10, caractérisé en ce que le boîtier (19) comporte un doigt latéral (36) coopérant avec un dispositif de sécurité pour n'autoriser la mise en route du robot que lorsque l'accessoire (13) est verrouillé au socle (1).

## Patentansprüche

1. Haushalts-Elektrogerät mit einem Sockel (1), der einen Elektromotor (2) und Getriebeelemente (3, 4, 5) enthält, um eine vertikale Welle (6) in Drehung zu versetzen, die aus dem Sockel heraustritt, dadurch gekennzeichnet, daß es darüber hinaus einerseits einen Behälter (8) aufweist, der ein Zerkleinerungs- und Schneidelement (9) enthält, wobei der Behälter (8) lösbar so an dem Sockel (1) fixierbar ist, daß das Zerkleinerungs- und Schneidelement (9) unmittelbar mit der vertikalen Welle (6) gekoppelt wird, und andererseits ein Heiz- und Rührwerk-Zubehörteil (13) besitzt, das einen Behälter (14) und ein Heizmittel (17) aufweist, wobei der Behälter (14) ein Rührorgan (15) enthält und mit einem unteren Teil in thermischem Kontakt mit dem Heizmittel (17) steht, und wobei das Heiz- und Rührwerk-Zubehörteil (13) so lösbar an dem Sokkel (1) fixierbar ist, daß das Rührorgan (15) mit der vertikalen Welle (6) gekoppelt wird.

2. Haushalts-Elektrogerät nach Anspruch 1, dadurch gekennzeichnet, daß das Zubehörteil (13) ein Drehzahl-Untersetzungsgetriebe (18) aufweist, das mit dem Rührorgan (15) verbunden und unter dem Heizmittel (17) angeordnet ist, wobei dieses Untersetzungsgetriebe mit der vertikalen Welle (6) des Sockels (1) kuppelbar ist.

3. Gerät nach einem der Ansprüche 1 oder 2, dadurch gekennzeichnet, daß sich der Behälter (14) auf dem Heizmittel (17) aufliegt.

4. Gerät nach einem der Ansprüche 1 bis 3, dadurch gekennzeichnet, daß das Heizmittel (17) eine Heizplatte ist.

5. Gerät nach einem der Ansprüche 2 bis 4, dadurch gekennzeichnet, daß das Zubehörteil (13) ein Gehäuse (19) aufweist, das das Drehzahl-Untersetzungsgetriebe (18) enthält und eine untere Wand (20) besitzt, die Mittel aufweist, um sie mit dem Sockel (1) zu verriegeln.

6. Gerät nach einem der Ansprüche 4 oder 5, dadurch gekennzeichnet, daß das Gehäuse 19 eine obere Wand (21) aufweist, auf der die Heizplatte (17) fixiert ist.

7. Gerät nach Anspruch 6, dadurch gekennzeichnet, daß die Heizplatte (17) auf ihrer der oberen Wand (21) des Gehäuses (19) zugekehrten Seite einen elektrischen Heizwiderstand (22) besitzt, der von der oberen Wand (21) des Gehäuses durch eine Luftschicht getrennt ist, und daß die Platte (17) mit dieser oberen Wand (21) über Klötze (23) aus thermisch isolierendem Material verbunden ist.

8. Gerät nach einem der Ansprüche 2 bis 7, dadurch gekennzeichnet, daß das Untersetzungsgetriebe (18) eine vertikale Ausnehmung (24) besitzt, die durch Aufstecken auf die Ausgangswelle (6) des Sockels mit dieser kuppelbar ist.

9. Gerät nach einem der Ansprüche 4 bis 8, dadurch gekennzeichnet, daß die obere Seite (17a) der Heizplatte (17) Mittel aufweist, um den Behälter (14) auf dieser Platte (17) durch Drehen zu verriegeln.

10. Gerät nach einem der Ansprüche 2 bis 9, dadurch gekennzeichnet, daß der Behälter (17) einen vertikalen, zentralen Schacht (31) aufweist, in den eine vertikale Welle (32) eingesetzt ist, die aus dem Untersetzungsgetriebe (18) hervorgeht, wobei diese Welle (32) lösbar mit einer Hülse (33) gekuppelt ist, die fest mit dem Rührorgan (15) verbunden ist, das für eine Drehung im Innern des Behälters (14) angebracht ist.

11. Gerät nach einem der Ansprüche 5 bis 10, dadurch gekennzeichnet, daß das Gehäuse (19) einen seitlichen Finger (36) aufweist, der mit einer Sicherheitseinrichtung zusammenwirkt, um die Inbetriebnahme des Geräts nur dann zuzulassen, wenn das Zubehörteil (13) mit dem Sockel (1) verriegelt ist.

## Claims

1. Household electric processor comprising a base-plate (1) enclosing an electric motor (2) and transmission members (3, 4, 5) for rotationally driving a vertical shaft (6) projecting out of the baseplate, characterised in that it further comprises, on the one hand, a vessel (8) enclosing a mincing and slicing member (9), the vessel (8) being able to be fixed in a removable fashion to the baseplate (1) so that the mincing and slicing member (9) is directly coupled to the vertical shaft (6) and, on the other hand, a heating mixer accessory (13) comprising a vessel (14) and a heating means (17), the vessel (14) enclosing a mixing member (15) and having a lower part in thermal contact with the heating means (17), the heating mixer accessory (13) being able to be fixed in a removable fashion to the baseplate (1) so that the mixing member (15) is coupled to the vertical shaft (6).

2. Household electric processor in accordance with Claim 1, characterised in that the accessory (13) comprises a speed-reduction system (18) connected to the mixing member (15) and arranged under the heating means (17), this reduction system being able to be coupled to the vertical shaft (6) of the baseplate (1).

3. Processor in accordance with either of Claims 1 and 2, characterised in that the vessel (14) rests on the heating means (17).

4. Processor in accordance with one of Claims 1 to 3, characterised in that the heating means (17) is a heating plate.

5. Processor in accordance with one of Claims 2 to 4, characterised in that the accessory (13) comprises a housing (19) enclosing the speed-reduction system (18) and comprising a lower wall (20) comprising means for locking the latter to the baseplate (1).

6. Processor in accordance with either of Claims 4 and 5, characterised in that the housing (19) comprises an upper wall (21) to which the heating plate (17) is fixed.

7. Processor in accordance with Claim 6, characterised in that the heating plate (17) comprises, on its surface adjacent to the upper wall (21) of the housing (19), an electrical heating resistor (22), the latter being kept apart from the said upper wall (21) of the housing by a layer of air, and the plate (17) being connected to this upper wall (21) by means of blocks (23) made from a thermally insulating substance.

8. Processor in accordance with one of Claims 2 to 7, characterised in that the reduction system (18) comprises a vertical recess (24) able to be coupled by interlocking over the output shaft (6) of the baseplate.

9. Processor in accordance with one of Claims 4 to 8, characterised in that the upper face (17a) of the heating plate (17) comprises means for locking the vessel (14) on this plate (17) by rotation.

10. Processor in accordance with one of Claims 2 to 9, characterised in that the vessel (17) comprises a vertical central chimney (31) in which there is engaged a vertical shaft (32) coming from the reduction system (18), this shaft (32) being coupled in a removable fashion to a sleeve (33) securely fastened to the mixing member (15) mounted rotationally inside the vessel (14).

11. Processor in accordance with one of Claims 5 to 10, characterised in that the housing (19) comprises a lateral finger (36) interacting with a safety device so as to allow the'processor to be switched on only when the accessory (13) is locked to the baseplate (1).
